# EUROPEAN PATENT APPLICATION

(11) **EP 4 398 586 A1**
(43) Date of publication of application: **10.07.2024**
(21) Application number: 22862710.5
(22) Date of filing: 11.05.2022
(51) Int. Cl.: H04N 21/44, H04N 21/434, G07C 5/00

(54) **VISUALIZATION METHOD AND SYSTEM FOR VARIOUS DATA COLLECTED BY SENSOR**

(30) Priority: 30.08.2021 CN 202111006671
(71) Applicant: Chengdu Jouav Automation Tech Co., Ltd., Chengdu, Sichuan 610095 (CN)
(72) Inventor: YUAN, Rui, Chengdu, Sichuan 610095 (CN); LEI, Ming, Chengdu, Sichuan 610095 (CN); LIU, Hang, Chengdu, Sichuan 610095 (CN)
(74) Representative: JD&P Patent Attorneys Joanna Dargiewicz & Partners
(86) International application number: PCT/CN2022/092130
(87) International publication number: WO 2023/029567

(57) **Abstract**

The present disclosure provides a visualization method and a visualization system for various data collected by a sensor. The visualization method includes: obtaining image compression bitstreams and metadata; encapsulating the metadata into predefined fields of the image compression bitstreams frame by frame in a time synchronization manner, and generating a full-motion video bitstream including the metadata; transmitting the full-motion video bitstream to a receiving end through a communication link; and parsing and rendering the full-motion video bitstream into a full-motion video including the metadata. According to the present disclosure, the metadata is encapsulated into the predefined fields of the image compression bitstreams frame by frame in a time synchronization manner, so as to generate the full-motion video bitstream including the metadata. The receiving end parses the full-motion video bitstream into the image frames and element information temporally synchronizing with the image frames, and renders the image frames and the element information in the display interface in real time, so it is able to achieve the diversification of the visual content. In addition, the image frames synchronize with the metadata, so it is able to ensure the effectiveness of the element information.

## Description

This application claims a priority of the Chinese patent application No.202111006671.5 filed on August 30, 2021 and entitled "visualization method and system for various data collected by sensor", which is incorporated herein by reference in its entirety.

### TECHNICAL FIELD

The present disclosure relates to the field of wireless communication technology, in particular to a visualization method and a visualization system for various data collected by a sensor.

### BACKGROUND

Along with the diversification of data collected by sensors, a backend data processing unit is adapted to more application scenarios, and at this time the data transmission is highly demanded. For example, during the data transmission, it is necessary to ensure the data reliability, the data diversification, as well as synchronization between different types of data.

Taking an Unmanned Aerial Vehicle (UAV) with a sensor as an example, in a conventional method for visual representation in accordance with data collected by the UAV, usually merely video data or metadata is transmitted. However, in actual use (e.g., in a real-time task such as patrolling), in the case of a single data type, it is difficult to provide a new application, e.g., monitoring a flight state in real time, and it is difficult for a user to accurately determine data related to an image collected by the UAV in accordance with visual content.

In a word, for the conventional visualization method based on data collected by the sensor, there is insufficient visual content and effective information.

### SUMMARY

An object of the present disclosure is to provide a visualization method and a visualization system for various data collected by the sensor, so as to solve the problem in the related art where there is insufficient visual content and effective information.

In one aspect, the present disclosure provides in some embodiments a visualization method for various data collected by a sensor, including: obtaining image compression bitstreams and metadata; encapsulating the metadata into predefined fields of the image compression bitstreams frame by frame in a time synchronization manner, and generating a full-motion video bitstream including the metadata; transmitting the full-motion video bitstream to a receiving end through a communication link; and parsing and rendering the full-motion video bitstream into a full-motion video including the metadata.

In a possible embodiment of the present disclosure, the parsing and rendering the full-motion video bitstream into the full-motion video including the metadata includes: parsing the full-motion video bitstream into image frames and the metadata temporally synchronizing with the image frames frame by frame; and when each image frame is obtained, parsing element information included in the metadata and temporally synchronizing with the image frame, rendering the image frame, adding the element information into the image frame, and displaying the image frame on a display interface, so as to generate the full-motion video including the image frames.

In a possible embodiment of the present disclosure, the parsing the full-motion video bitstream into the image frames and the metadata temporally synchronizing with the image frames frame by frame includes: parsing the full-motion video bitstream into the image frames including the metadata in accordance with a frame start field; and extracting the metadata in the image frames in accordance with the frame start field, and obtaining the full-motion video bitstream including the image frames or the image compression bitstream not including the metadata.

In a possible embodiment of the present disclosure, the visualization method further includes: when the full-motion video bitstream is transmitted by a transmitting end to the receiving end through the communication link and the communication link includes at least one transmission node, parsing the full-motion video bitstream into the image frames and the metadata temporally synchronizing with the image frames through the transmission node; modifying the metadata, encapsulating the modified metadata into a predefined field of the image frame in a time synchronization manner, and generating the full-motion video bitstream including the modified metadata; and transmitting the full-motion video bitstream including the modified metadata to the receiving end continuously through the communication link.

In a possible embodiment of the present disclosure, the adding the element information into the image frame and displaying the image frame on the display interface includes: parsing the element information included in the metadata and temporally synchronizing with the image frame, and directly rendering and loading the element information to the display interface; or parsing the element information, calculating a part of the element information, and rendering and loading the processed element information to the display interface.

In a possible embodiment of the present disclosure, the obtaining the image compression bitstreams and metadata includes: outputting a first control signal for collecting the image compression bitstreams and a second control signal for collecting the metadata through a same reference clock circuit, the first control signal and the second control signal having a same reference clock; and obtaining the image compression bitstreams and the metadata including an absolute time in accordance with the first control signal and the second control signal.

In a possible embodiment of the present disclosure, the metadata at least includes Global Navigation Satellite System (GNSS) positioning data.

In a possible embodiment of the present disclosure, the predefined field is a Supplemental Enhancement Information (SEI) field.

In another aspect, the present disclosure provides in some embodiments a visualization system for various data collected by a sensor, including: a transmitting end configured to obtain image compression bitstreams and metadata, encapsulate the metadata into predefined fields of the image compression bitstreams frame by frame in a time synchronization manner, generate a full-motion video bitstream including the metadata, and transmit the full-motion video bitstream to a receiving end through a communication link; and the receiving end configured to parse and render the full-motion video bitstream into a full-motion video including the metadata.

In a possible embodiment of the present disclosure, when the communication link includes at least one transmission node, the transmission node is configured to: parse the full-motion video bitstream into the image frames and the metadata temporally synchronizing with the image frames through the transmission node; modify the metadata, encapsulate the modified metadata into a predefined field of the image frame in a time synchronization manner, and generate the full-motion video bitstream including the modified metadata; and transmit the full-motion video bitstream including the modified metadata to the receiving end continuously through the communication link.

In a possible embodiment of the present disclosure, the transmitting end includes: a data collection unit configured to collect the metadata and the image compression bitstreams; and a data processing unit configured to generate the full-motion video bitstream including the metadata.

According to the visualization method in the embodiments of the present disclosure, the metadata is encapsulated into the predefined fields of the image compression bitstreams frame by frame in a time synchronization manner, so as to generate the full-motion video bitstream including the metadata. The receiving end parses the full-motion video bitstream into the image frames and the element information temporally synchronizing with the image frames, and renders the image frames and the element information in the display interface in real time, so it is able to achieve the diversification of the visual content. In addition, the image frames synchronize with the metadata, so it is able to ensure the effectiveness of the element information.

### BRIEF DESCRIPTION OF THE DRAWINGS

Fig. 1 is a flow chart of a visualization method for various data collected by a sensor according to one embodiment of the present disclosure; and
Fig. 2 is a schematic view showing a visualization system for various data collected by a sensor according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

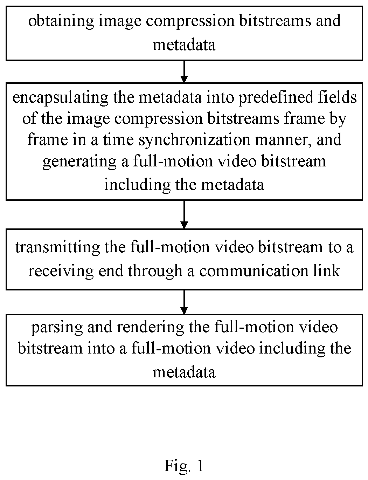

As shown in Fig. 1, the present disclosure provides in some embodiments a visualization method for various data collected by a sensor, which includes: obtaining image compression bitstreams and metadata; encapsulating the metadata into predefined fields of the image compression bitstreams frame by frame in a time synchronization manner, and generating a full-motion video bitstream including the metadata; transmitting the full-motion video bitstream to a receiving end through a communication link; and parsing and rendering the full-motion video bitstream into a full-motion video including the metadata. In the case that a communication transport protocol is H264 or H265, the predefined field is an SEI field, and in the case that the communication transport protocol is a Moving Picture Experts Group 2 (MPEG2) Transport Stream (TS) encapsulation protocol, the predefined field is a custom field. The type of the metadata depends on a type of a device with a sensor. For example, when the device is a boat, the metadata includes device state data, e.g., GNSS data, wind direction or course. When the device is an aircraft, the metadata at least includes aircraft Position and Orientation System (POS) data, aircraft state, load sensor type, pod POS data, pod state and image processing board data. When a sensor is a fixed camera, the metadata includes positioning, viewing direction, pitch angle, field angle, height of pole, channel, transmission bandwidth, device Identity Document (ID), etc. The aircraft POS data at least includes yaw angle, pitch angle, roll angle, longitude and latitude, height, distance from a starting point, azimuth relative to the starting point, and velocity. The pod POS data at least includes horizontal field angle in visible light, vertical field angle in visible light, horizontal field angle in infrared light, vertical field angle in infrared light, camera focal length, course Euler angle of the pod, pitch Euler angle of the pod, course frame angle, pitch frame angle, roll frame angle, longitude, latitude and height of an object, velocity of the object, velocity azimuth of the object, and estimated distance between the object and the aircraft.

The parsing and rendering the full-motion video bitstream into the full-motion video including the metadata includes: parsing the full-motion video bitstream into image frames and the metadata temporally synchronizing with the image frames frame by frame; and when each image frame is obtained, parsing element information included in the metadata and temporally synchronizing with the image frame, rendering the image frame, adding the element information into the image frame, and displaying the image frame on a display interface, so as to generate the full-motion video including the image frames. The element information is rendered on the display interface in the form of text or image, so as to enable a user to know such information as a device state or a task state. The generating the element information in accordance with the metadata includes extracting the element information including coordinates of the device in accordance with the GNSS data. When the device with the sensor is a UAV, a geographical element, e.g., coordinates of a center of a field of view, is calculated in accordance with the GNSS data and a field angle, and a range of the field of view on a map is calculated in accordance with the field angle and the pitch yaw angle. The visualization method further includes, when the image frame is rendered as an image displayed on the display interface, adding the element information to a region in the display interface where no image is to be displayed. In the embodiments of the present disclosure, the metadata is encapsulated synchronously into the image compression bitstreams, so that the receiving end extracts the pure image frames from the full-motion video bitstream and extracts the metadata synchronizing with the image frames from the predefined fields of the full-motion video bitstream without any damage to the image compression bitstreams. In this way, it is able to ensure the synchronization of the image frames with the metadata as well as the purity thereof, thereby to enable the receiving end to achieve the visualization of the full-motion video in real time, perform image stitching, and analyze a load state merely in accordance with the metadata. In addition, during the visualization, the metadata synchronizes with the image frames, so the image parsed and rendered by the receiving end on the display interface completely synchronizes with the element information. As a result, it is able to effectively represent the element information about the image.

The adding the element information into the image frame and displaying the image frame on the display interface includes: parsing the element information included in the metadata and temporally synchronizing with the image frame, and directly rendering and loading the element information to the display interface; or parsing the element information, calculating a part of the element information, and rendering and loading the processed element information to the display interface. The element information capable of being directly rendered and loaded to the display interface includes element information directly obtained from the metadata, e.g., the coordinates of the device directly extracted from the GNSS data in the metadata. The element information capable of being rendered and loaded to the display interface after being processed includes element information obtained through calculation in accordance with at least two kinds of metadata, e.g., coordinates of a center of a field of view of a UAV calculated in accordance with the GNSS data and a field angle, or a range of the field of view on a map calculated in accordance with the field angle and a pith yaw angle.

The parsing the full-motion video bitstream into the image frames and the metadata temporally synchronizing with the image frames frame by frame includes: parsing the full-motion video bitstream into the image frames including the metadata in accordance with a frame start field; and extracting the metadata in the image frames in accordance with the frame start field, and obtaining the full-motion video bitstream including the image frames or the image compression bitstream not including the metadata.

The visualization method further includes: when the full-motion video bitstream is transmitted by a transmitting end to the receiving end through the communication link and the communication link includes at least one transmission node, parsing the full-motion video bitstream into the image frames and the metadata temporally synchronizing with the image frames through the transmission node; modifying the metadata, encapsulating the modified metadata into a predefined field of the image frame in a time synchronization manner, and generating the full-motion video bitstream including the modified metadata; and transmitting the full-motion video bitstream including the modified metadata to the receiving end continuously through the communication link. Through encapsulating the metadata in the image compression bitstream, when there is the transmission node in the communication link, it is able for the transmission node to extract a pure image frame from the full-motion video bitstream and extract the metadata synchronizing with the image frame from the predefined field of the full-motion video bitstream without any damage to the image compression bitstream. In this way, the method is applied to various scenarios through the transmission node. In addition, the transmission node modifies the metadata, encapsulates the metadata and the image frames again, and transmits them to the receiving end. In this way, it is able to modify the full-motion video stream during the transmission in the communication link, and improve the diversity of the application scenarios.

The obtaining the image compression bitstreams and metadata includes: outputting a first control signal for collecting the image compression bitstreams and a second control signal for collecting the metadata through a same reference clock circuit, the first control signal and the second control signal having a same reference clock; and obtaining the image compression bitstreams and the metadata including an absolute time in accordance with the first control signal and the second control signal. In the embodiments of the present disclosure, reference clock signals from a same reference clock circuit are taken as the first control signal and the second control signal, and timestamps in the image compression bitstream and the metadata are set with reference to a same clock source, so the timestamps are considered as absolute times relative to each other in a system including the same clock source. In addition, a method for generating the first control signal and the second control signal will not be particularly defined herein. In the case of different types of devices, the methods for generating the control signals are different. For example, in the case that the device is an aircraft, upon the receipt of an instruction from a ground station, a load processing sub-unit of the aircraft outputs the first control signal and the second control signal through a same reference clock circuit. In the case that the device is a vehicle, upon the receipt of an instruction issued by a cloud, a controller of the vehicle outputs the first control signal and the second control signal through a same reference clock circuit. In a word, in the embodiments of the present disclosure, the first control signal and the second control signal are generated through a same reference clock circuit, but a specific generation method will not be particularly defined herein.

According to the visualization method in the embodiments of the present disclosure, the metadata is encapsulated into the predefined fields of the image compression bitstreams frame by frame in a time synchronization manner, so as to generate the full-motion video bitstream including the metadata. The receiving end parses the full-motion video bitstream into the image frames and the element information temporally synchronizing with the image frames, and renders the image frames and the element information in the display interface in real time, so it is able to achieve the diversification of the visual content. In addition, the image frames synchronize with the metadata, so it is able to ensure the effectiveness of the element information.

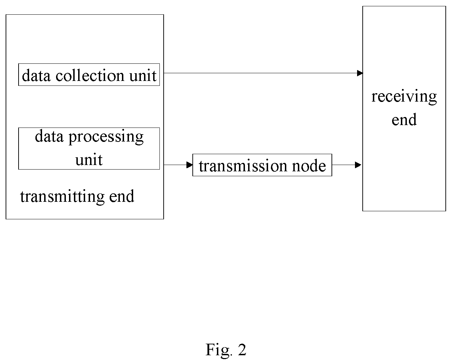

As shown in Fig. 2, the present disclosure further provides in some embodiments a visualization system for various data collected by a sensor, including: a transmitting end configured to obtain image compression bitstreams and metadata, encapsulate the metadata into predefined fields of the image compression bitstreams frame by frame in a time synchronization manner, generate a full-motion video bitstream including the metadata, and transmit the full-motion video bitstream to a receiving end through a communication link; and the receiving end configured to parse and render the full-motion video bitstream into a full-motion video including the metadata.

When the communication link includes at least one transmission node, the transmission node is configured to: parse the full-motion video bitstream into the image frames and the metadata temporally synchronizing with the image frames through the transmission node; modify the metadata, encapsulate the modified metadata into a predefined field of the image frame in a time synchronization manner, and generate the full-motion video bitstream including the modified metadata; and transmit the full-motion video bitstream including the modified metadata to the receiving end continuously through the communication link.

The transmitting end includes: a data collection unit configured to collect the metadata and the image compression bitstreams; and a data processing unit configured to generate the full-motion video bitstream including the metadata.

The visualization method and system have been described hereinabove in details. The above embodiments have been described in a progressive manner, and the same or similar contents in the embodiments have not been repeated, i.e., each embodiment has merely focused on the difference from the others. Especially, the device embodiments are substantially similar to the method embodiments, and thus have been described in a simple manner. It should be further appreciated that, a person skilled in the art may make further modifications and improvements without departing from the spirit of the present disclosure, and these modifications and improvements shall also fall within the scope of the present disclosure.

It should be further appreciated that, the units and algorithm steps described herein may be implemented as electronic hardware, computer software or both. In order to clearly explain the interchangeability of hardware and software, the general description about functions of the illustrative units and steps has been given. Whether these functions are implemented as software or hardware depends on a specific application and an entire system design constraint. The functions may be achieved in various ways with respect to a specific application, but the implementation shall not be construed as departing from the scope of the present disclosure.

The steps in the method or algorithm described herein may be directly included in hardware, a software module executed by a processor, or both. The software module may reside in a Random Access Memory (RAM), a flash memory, a Read-Only Memory (ROM), an Electrically Programmable ROM (EPROM), an Electrically Erasable PROM (EEPROM), a register, a hard disc, a mobile disc, a Compact Disc-ROM (CD-ROM), or any other storage medium known in the art.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A visualization method for various data collected by a sensor, comprising:
obtaining image compression bitstreams and metadata;
encapsulating the metadata into predefined fields of the image compression bitstreams frame by frame in a time synchronization manner, and generating a full-motion video bitstream comprising the metadata;
transmitting the full-motion video bitstream to a receiving end through a communication link; and
parsing and rendering the full-motion video bitstream into a full-motion video comprising the metadata.

2. The visualization method according to claim 1, wherein the parsing and rendering the full-motion video bitstream into the full-motion video comprising the metadata comprises:
parsing the full-motion video bitstream into image frames and the metadata temporally synchronizing with the image frames frame by frame; and
when each image frame is obtained, parsing element information comprised in the metadata and temporally synchronizing with the image frame, rendering the image frame, adding the element information into the image frame, and displaying the image frame on a display interface, so as to generate the full-motion video comprising the image frames.

3. The visualization method according to claim 2, wherein the parsing the full-motion video bitstream into the image frames and the metadata temporally synchronizing with the image frames frame by frame comprises:
parsing the full-motion video bitstream into the image frames comprising the metadata in accordance with a frame start field; and
extracting the metadata in the image frames in accordance with the frame start field, and obtaining the full-motion video bitstream comprising the image frames or the image compression bitstream not comprising the metadata.

4. The visualization method according to claim 1, further comprising:
when the full-motion video bitstream is transmitted by a transmitting end to the receiving end through the communication link and the communication link comprises at least one transmission node, parsing the full-motion video bitstream into the image frames and the metadata temporally synchronizing with the image frames through the transmission node;
modifying the metadata, encapsulating the modified metadata into a predefined field of the image frame in a time synchronization manner, and generating the full-motion video bitstream comprising the modified metadata; and
transmitting the full-motion video bitstream comprising the modified metadata to the receiving end continuously through the communication link.

5. The visualization method according to claim 2, wherein the adding the element information into the image frame and displaying the image frame on the display interface comprises:
parsing the element information comprised in the metadata and temporally synchronizing with the image frame, directly rendering and loading the element information to the display interface; or
parsing the element information, calculating the element information, and rendering and loading the processed element information to the display interface.

6. The visualization method according to claim 1, wherein the obtaining the image compression bitstreams and metadata comprises:
outputting a first control signal for collecting the image compression bitstreams and a second control signal for collecting the metadata through a same reference clock circuit, the first control signal and the second control signal having a same reference clock; and
obtaining the image compression bitstreams and the metadata comprising an absolute time in accordance with the first control signal and the second control signal.

7. The visualization method according to claim 2, wherein the metadata at least comprises Global Navigation Satellite System (GNSS) positioning data.

8. The visualization method according to claim 1, wherein the predefined field is a Supplemental Enhancement Information (SEI) field.

9. A visualization system for various data collected by a sensor, comprising:
a transmitting end configured to obtain image compression bitstreams and metadata, encapsulate the metadata into predefined fields of the image compression bitstreams frame by frame in a time synchronization manner, generate a full-motion video bitstream comprising the metadata, and transmit the full-motion video bitstream to a receiving end through a communication link; and
the receiving end configured to parse and render the full-motion video bitstream into a full-motion video comprising the metadata.

10. The visualization system according to claim 9, wherein when the communication link comprises at least one transmission node, the transmission node is configured to:
parse the full-motion video bitstream into the image frames and the metadata temporally synchronizing with the image frames through the transmission node; modify the metadata, encapsulate the modified metadata into a predefined field of the image frame in a time synchronization manner, and generate the full-motion video bitstream comprising the modified metadata; and
transmit the full-motion video bitstream comprising the modified metadata to the receiving end continuously through the communication link.

11. The visualization system according to claim 9, wherein the transmitting end comprises:
a data collection unit configured to collect the metadata and the image compression bitstreams; and
a data processing unit configured to generate the full-motion video bitstream comprising the metadata.
